# EUROPEAN PATENT SPECIFICATION

(11) **EP 3 120 624 B1**
(45) Date of publication and mention of the grant of the patent: **03.01.2018**
(21) Application number: 15712718.4
(22) Date of filing: 02.03.2015
(51) Int. Cl.: H04W 52/22, H04W 52/28

(54) **METHOD AND APPARATUS FOR POSITIONING MEASUREMENT MANAGEMENT**
VERFAHREN UND VORRICHTUNG ZUR MESSVERWALTUNGSPOSITIONIERUNG
PROCÉDÉ ET APPAREIL DE GESTION DE MESURE DE POSITIONNEMENT

(30) Priority: 21.03.2014 US 201414222493
(43) Date of publication of application: 25.01.2017
(73) Proprietor: Qualcomm Incorporated, San Diego, CA 92121-1714 (US)
(72) Inventor: AGRAWAL, Meghna, San Diego, California 92121 (US); DUA, Praveen, San Diego, California 92121 (US)
(74) Representative: Schmidbauer, Andreas Konrad
(86) International application number: PCT/US2015/018227
(87) International publication number: WO 2015/142502

(56) References cited:
- EP-A2- 1 398 981
- US-A1- 2011 177 827
- US-A1- 2011 223 931
- ERICSSON ET AL: "Introduction of LTE positioning", 3GPP DRAFT; R1-093627 36.213 POSITIONING CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20090824, 29 August 2009 (2009-08-29), XP050489156, [retrieved on 2009-08-29]

## Description

### BACKGROUND

Advancements in wireless communication technology have greatly increased the versatility of today's wireless communication devices. These advancements have enabled wireless communication devices to evolve from simple mobile telephones and pagers into sophisticated computing devices capable of a wide variety of functionality such as multimedia recording and playback, event scheduling, word processing, e-commerce, etc. As a result, users of today's wireless communication devices are able to perform a wide range of tasks from a single, portable device that conventionally required either multiple devices or larger, non-portable equipment.

Various technologies are utilized for locating the position of a wireless communication device. Some mobile positioning technologies are based on network-based positioning (NBP), in which a network communicating with a mobile device obtains indications of signal measurements made by a mobile device and computes the position of the device within the network. This is in contrast to mobile-based positioning (MBP), in which a mobile device measures signals from a network and estimates its own position. Applications of NBP and MBP include personal navigation, social networking, and targeting of content (e.g., advertisements, search results, etc.), among others.

One of the challenges associated with traditional mobile positioning techniques is providing means by which position estimates may be provided concurrently to multiple mobile devices requesting their respective positions at approximately the same time. In general, the number of positioning requests (location requests) supported by a given network is limited by the network bandwidth available. Further, since both NBP and MBP are based on measurements associated with signals transmitted between network APs and a mobile device, and APs generally have higher transmit (Tx) power and larger communication ranges than mobile devices, AP transmissions for positioning introduce interference to neighboring APs. This, in turn, reduces the network bandwidth available for the neighboring APs and limits the scalability of mobile positioning implementations.

Attention is drawn to the document EP 1 398 981 (A2). It describes a power control device for adjusting power output levels that can include a transmitter configured to transmit at least one first signal, and a receiver configured to receive at least one second signal. In addition, the power control device can have a processing unit configured to determine at least one location information based on the first signal and the second signal, and a power adjusting unit configured to adjust a power output level corresponding to the at least one location information. A power control device is activated to send a signal to mobile device e.g. mobile telephony and to receive reflected signal. A location information of mobile telephone is determined based on the reflected signal, and a power output level is adjusted corresponding to location information.

Further attention is drawn to document US 2011/223931 (A1) describing a transmitting communication device that may iteratively adjust its transmit power, and may estimate, based on iterative transmit power adjustment, relative location of a receiving communication device. The transmit power may be initialized to a maximum value, and the transmit power may be iteratively reduced until connectivity with the receiving communication device is lost. The loss of connectivity may be determined based on reception of responses to ping messages transmitted by the transmitting communication device. The transmitting communication device may authenticate the receiving communication device and/or a user of the receiving communication device. The authentication may comprises utilizing transmit power adjustment and/or relative location estimation therefrom to ensure that a separation between the devices does not exceed a maximum value. The transmitting communication device may generate location info associated with the receiving communication device based on the relative location estimation, and may communicate the location info to a location server.

Also, attention is drawn to document US 2011/177827 (A1), which describes a system of and method of accurate positioning of a wireless handset that combines a positioning signal with a communication signal. For locations where a wireless handset cannot receive an adequate signal, the system receives a carrier signal either through a donor antenna, exterior a building, or a base station connected to the carrier. In addition to a communication signal, the system adds a location signal to assist the wireless handset in determining the wireless handset's location. The power level of the location signal, a pilot beacon signal, is adjusted so to be sufficiently strong but not at a level that will cause interference with the communication signal. The pilot beacon signal uses a different path than the communication signal to minimize delays. In addition, the system adjusts the offset, either positively or negatively, to account for timing delays caused by hardware and cables. The pilot beacon signal has multiple channels so that each repeating antenna has a distinct pilot beacon signal. Each handset always hears a pilot beacon signal, regardless of what channel the handset picks to communicate on.

Finally attention s drawn to a paper by ERICSSON ET AL, entitled "Introduction of LTE positioning", 3GPP DRAFT; R1-093627 36.213 POSITIONING CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20090829), vol. RAN WG1, no. Shenzhen, China; 20090824.

### SUMMARY

In accordance with the present invention, a method and apparatus for controlling transmit power, as set forth in the independent claims is provided. Embodiments of the invention are claimed in the dependent claims.

An example of a method for controlling transmit (Tx) power of an access point (AP) in a wireless communication system as described herein includes detecting initialization of a positioning exchange between the AP and a mobile device; determining estimated operating parameters of the mobile device, the estimated operating parameters of the mobile device comprising an estimated coverage area of the mobile device and an estimated Tx power level of the mobile device; and setting an AP Tx power level for transmissions from the AP to the mobile device during the positioning exchange as a function of the estimated operating parameters of the mobile device.

An example of an apparatus for managing AP transmission power as described herein includes an AP coordination module configured to detect initialization of a positioning exchange between an AP and a mobile device; and a network based positioning (NBP) module configured to determine estimated operating parameters of the mobile device, the estimated operating parameters comprising an estimated coverage area of the mobile device and an estimated Tx power level of the mobile device, and to set an AP Tx power level for transmissions from the AP to the mobile device during the positioning exchange as a function of the estimated operating parameters of the mobile device.

An example of an apparatus for controlling Tx power of an AP in a wireless communication system as described herein includes means for detecting initialization of a positioning exchange between the AP and a mobile device; means for determining estimated operating parameters of the mobile device, the estimated operating parameters comprising an estimated coverage area of the mobile device and an estimated Tx power level of the mobile device; and means for setting an AP Tx power level for transmissions from the AP to the mobile device during the positioning exchange as a function of the estimated operating parameters of the mobile device.

An example of a non-transitory processor-readable storage medium as described herein includes processor-executable instructions configured to cause a processor to detect initialization of a positioning exchange between an AP and a mobile device; determine estimated operating parameters of the mobile device, the estimated operating parameters comprising an estimated coverage area of the mobile device and an estimated Tx power level of the mobile device; and set an AP Tx power level for transmissions from the AP to the mobile device during the positioning exchange as a function of the estimated operating parameters of the mobile device.

Items and/or techniques described herein may provide one or more of the following capabilities, as well as other capabilities not mentioned. The number of disjoint AP coverage areas that can be located within a given venue may be increased, thereby enabling more APs 16 to be positioned within a venue. The number of location requests that can be handled by a network concurrently may be increased. Network congestion may be reduced, which may in turn reduce collisions between network devices. Other capabilities may be provided and not every implementation according to the disclosure must provide any particular capability, let alone all of the capabilities, discussed. Further, it may be possible for an effect noted above to be achieved by means other than that noted, and a noted item/technique may not necessarily yield the noted effect.

### BRIEF DESCRIPTION OF THE DRAWINGS

FIG. 1 is a schematic diagram of a wireless communication environment associated with an indoor region.
FIG. 2 is a block diagram of components of one embodiment of a mobile station shown in FIG. 1.
FIG. 3 is a block diagram of components of one embodiment of an access point shown in FIG. 1.
FIG. 4 is a block diagram of components of one embodiment of a positioning server shown in FIG. 1.
FIG. 5 is a functional block diagram of one embodiment of an NBP system.
FIG. 6 is an illustrative view of device coverage areas associated with a wireless communication system.
FIGS. 7-8 are block diagrams of respective systems for conducting power control in the NBP system shown in FIG. 5.
FIGS. 9-10 are illustrative views of device coverage areas in a wireless communication system resulting from respective power control algorithms.
FIG. 11 is a block diagram of a system for adjusting transmit power for positioning messages at an access point.
FIGS. 12-13 are block flow diagrams of respective processes for controlling a transmit power of an access point for positioning signaling.

### DETAILED DESCRIPTION

Described herein are systems and methods for managing (controlling) power levels associated with positioning messages transmitted within a wireless communication network. Positioning messages may be transmitted according to an NBP protocol, in which a position of a mobile device is provided by measurements (e.g., measurements of round trip time (RTT), received signal strength indication (RSSI), etc.) collected by network access points (APs). Alternatively, an MBP protocol may be used, in which measurements are collected and used by a mobile device to determine its own position. NBP and MBP are collectively referred to herein as "mobile positioning" or simply "positioning."

As described herein, APs that provide for mobile positioning (e.g., in an NBP or MBP implementation) can utilize various transmit power control (TPC) mechanisms for positioning messages in order to increase the number of mobile devices supported for positioning using the same network load. The power control may be done by a central entity, such as an NBP library module at a positioning server, autonomously by individual APs, and/or in other ways, as described below.

While various implementations described herein may refer to network elements and/or utilize nomenclature specific to one or more network technologies, the techniques described herein are not limited to a specific technology and may be applied to any suitable technology or combination thereof, whether presently existing or developed in the future. Further, as some of the implementations described herein apply to NBP systems, similar concepts may also apply to MBP systems and/or other systems, as described below.

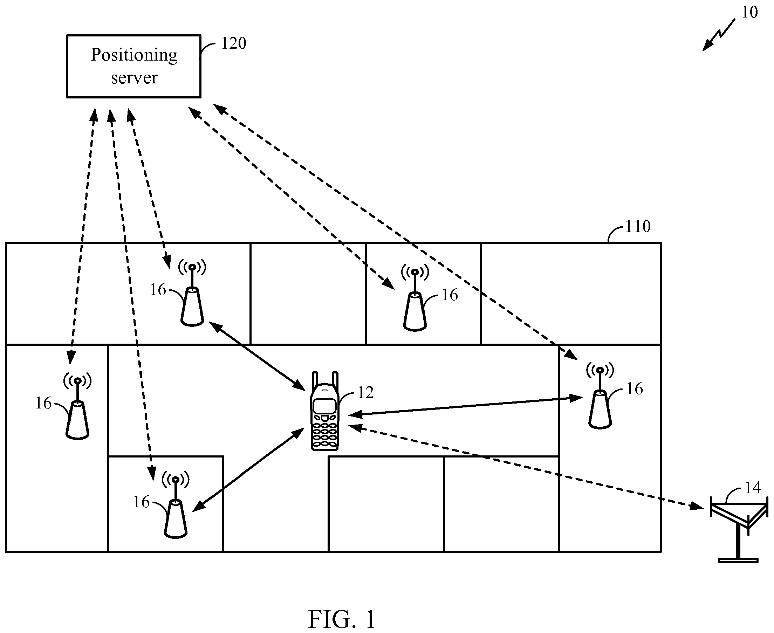

Systems and methods described herein operate via one or more mobile devices operating in a wireless communication system. Referring to **FIG. 1****,** an example wireless communication system 10, in communication with a mobile device 12, includes a base transceiver stations BTS and wireless access points (APs) 16. Although only one BTS 14 is shown in **FIG. 1****,** more than one BTS 14 could be used. The BTS 14 and APs 16 provide communication service for a variety of wireless communication devices, referred to herein as mobile devices, although only the one mobile device 12 is shown in **FIG. 1** and referred to below. Wireless communication devices served by a BTS 14 and/or AP 16 can include, but are not limited to, personal digital assistants (PDAs), smartphones, computing devices such as laptops, desktops or tablet computers, automobile computing systems, etc., whether presently existing or developed in the future.

The system 10 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc.

The BTS 14 and APs 16 can wirelessly communicate with the mobile device 12 in the system 10 via antennas. A BTS 14 may also be referred to as a base station, a Node B, an evolved Node B (eNB), etc. The APs 16 may also be referred to as access nodes (ANs), hotspots, etc. The BTS 14 is configured to communicate with mobile device 12 via multiple carriers. The BTS 14 can provide communication coverage for a respective geographic area, such as a cell. The cell of the BTS 14 can be partitioned into multiple sectors as a function of the base station antennas.

The system 10 may include only macro base stations 14 or it can have base stations 14 of different types, e.g., macro, pico, and/or femto base stations, etc. A macro base station may cover a relatively large geographic area (e.g., several kilometers in radius) and may allow unrestricted access by terminals with service subscription. A pico base station may cover a relatively small geographic area (e.g., a pico cell) and may allow unrestricted access by terminals with service subscription. A femto or home base station may cover a relatively small geographic area (e.g., a femto cell) and may allow restricted access by terminals having association with the femto cell (e.g., terminals for users in a home).

While both the BTS 14 and APs 16 are shown in the system 10, a wireless communication environment need not contain both BTSs 14 and APs 16, and may include BTSs 14, APs 16, or both in any number or configuration. Generally, a BTS 14 supports communication via one or more cellular radio access technologies such as Global System for Mobile Communication (GSM), Universal Mobile Telecommunications System (UMTS), Long Term Evolution (LTE) and/or other technologies developed by the Third Generation Partnership Project (3GPP), CDMA2000 and/or other technologies developed by 3GPP2, etc. An AP 16 generally supports communication via one or more technologies based on the IEEE (Institute of Electrical and Electronics Engineers) 802.11 specifications (e.g., Wi-Fi) or the like. However, BTSs 14 and APs 16 are not limited to these technologies and may employ additional or alternative functionality. Further, a single device may include some or all functionality of both a BTS 14 and an AP 16.

As further shown in system 10, the mobile device 12 is positioned within a venue (area, region) 110 such as a shopping mall, a school, or other indoor or outdoor area. Here, the APs 16 are positioned within the venue 110 and provide communication coverage for respective areas (rooms, stores, etc.) of the venue 110. Access to the APs 16 in the system 10 may be open, or alternatively access can be secured with a password, encryption key or other credentials.

While **FIG. 1** illustrates only the one mobile device 12, the system 10 may further include multiple mobile devices, which may be dispersed throughout the system 10. Mobile devices may be referred to as terminals, access terminals (ATs), mobile stations, user equipment (UE), subscriber units, etc. Further, mobile devices can include various devices as listed above and/or any other devices.

The system 10 may also implement NBP to facilitate positioning of one or more mobile devices 12 in the region 110. In some use cases, NBP may be desirable over MBP in order to provide positioning for a wider range of devices, e.g., devices having MBP functionality as well as devices lacking the equipment and/or processing capability to implement MBP functionality. Alternatively, MBP or other techniques could be used in place of NBP, or a combination of NBP, MBP, and/or other positioning techniques could be used in the system 10.

Here, positioning is coordinated through the positioning server 120. The positioning server 120 maintains a communications link, referred to as a backhaul link, with the APs 16 in the system 10. The backhaul link is generally a wired communication link (e.g., Ethernet, etc.), although wireless communication and/or other communication technologies could be used. The positioning server 120 coordinates the collection of measurements performed by the APs relating to positioning-related messages communicated between the APs 16 and the mobile device 12. The collected measurements are, in turn, used to obtain a position of the mobile device 12.

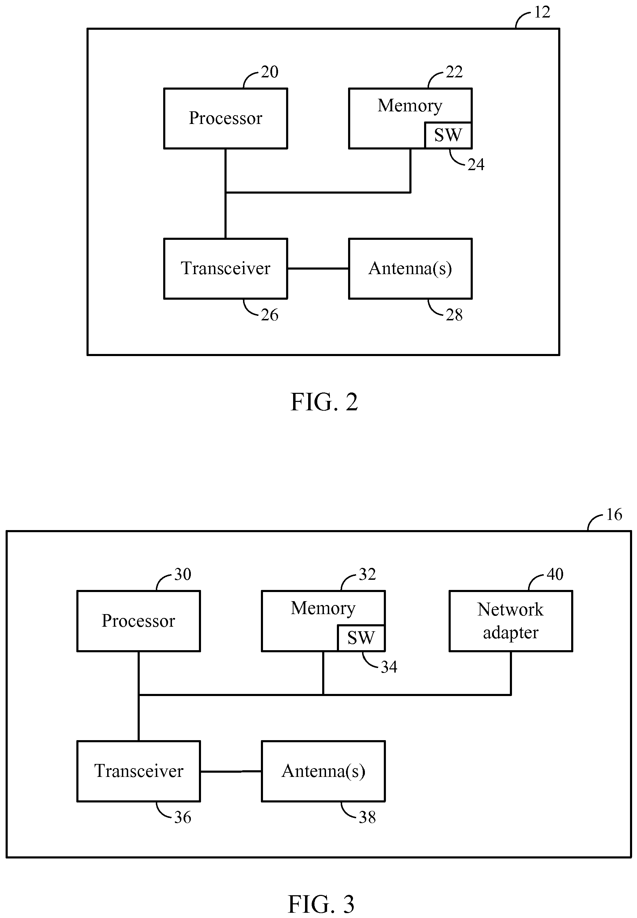

Referring next to **FIG. 2****,** an example of the mobile device 12 comprises a computer system including a processor 20, memory 22 including software 24, a transceiver 26, and antennas 28. The transceiver 26 provides, via the antennas 28, bi-directional communication functionality to other entities in one or more associated wireless communication networks, here the BTS 14 associated with a cellular network and/or the APs 16 associated with a localized communication network, as shown in **FIG. 1****.** In some implementations, the transceiver 26 may support communication over a variety of communication systems, and different ones of the antennas 28 may be used for different communication systems. For instance, the antennas 28 may include a first antenna for communicating with the BTS 14 and a second antenna for communicating with the APs 16. In other implementations, the antennas 28 used for communication with a given communication system may optionally be further divided into transmit (Tx) antennas and receive (Rx) antennas. Alternatively, respective ones of the antennas 28 can be used for both transmission and reception for an assigned system or combination of systems.

The processor 20 is preferably an intelligent hardware device, e.g., a central processing unit (CPU) such as those made by ARM®, Intel® Corporation, or AMD®, a microcontroller, an application specific integrated circuit (ASIC), etc. The processor 20 could comprise multiple separate physical entities that can be distributed in the mobile device 12. The memory 22 includes random access memory (RAM) and read-only memory (ROM). The memory 22 is a non-transitory processor-readable storage medium that stores software 24 which is processor-readable, processor-executable software code containing processor-readable instructions that are configured to, when executed, cause the processor 20 to perform various functions described herein (although the description may refer only to the processor 20 performing the functions). Alternatively, the software 24 may not be directly executable by the processor 20 but configured to cause the processor 20, e.g., when compiled and executed, to perform the functions. Media that can make up the memory 22 include, but are not limited to, RAM, ROM, FLASH, disc drives, etc.

Referring next to **FIG. 3****,** an example one of the APs 16 comprises a computer system including a processor 30, memory 32 including software 34, a transceiver 36, antennas 38, and a network adapter 40. The processor 30 and memory 32 may be similarly structured to the processor 20 and memory 22 of the mobile device 12 shown in **FIG. 2****.** Here, the processor 30 and memory 32 of the AP 16 are configured (e.g., via the software 34 stored on the memory 32) to provide communication functionality for the mobile device 12 and/or other devices within communication range of the AP 16. The AP 16 communicates with the mobile device 12, other ones of the APs 16, and/or other entities in the system 10 via the antennas 38, which are associated with the transceiver 36 according to one or more communications protocols. Similar to the antennas 28 of the mobile device 12, the antennas 38 of the AP 16 may be divided into Tx and Rx antennas, antennas for multiple communication systems supported by the transceiver 36, etc.

The network adapter 40 of the AP 16 maintains a backhaul link (e.g., an Ethernet link, etc.) to the positioning server 120 and facilitates communication between the AP 16 and the positioning server 120 over the backhaul link. Alternatively, the AP 16 may maintain a wireless communication link with the positioning server 120 via the transceiver 36 and antennas 38, in which case the network adapter 40 may be omitted and/or implemented by the transceiver 36.

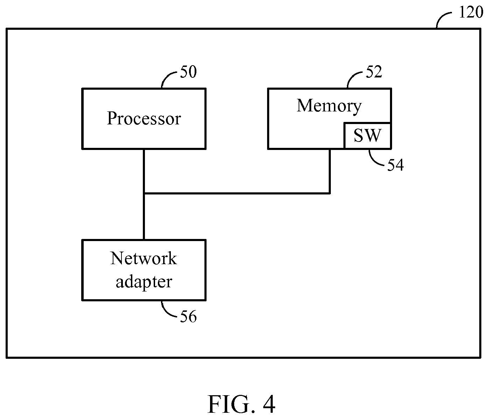

Referring to **FIG. 4****,** an example of the positioning server 120 comprises a computer system including a processor 50, memory 52 including software 54, and a network adapter 56. The processor 50 and memory 52 may be similarly structured to the processor 20 and memory 22 of the mobile device 12 shown in **FIG. 2** and/or the processor 30 and memory 32 of the AP 16 shown in **FIG. 3****.** Here, the processor 50 and memory 52 of the positioning server 120 are configured (e.g., via software 54 stored on the memory 52) to provide NBP for the mobile device 12 by coordinating the performance of measurements at the APs 16 related to positioning-related messages transmitted between the APs 16 and the mobile device 12 and utilizing these measurements to determine the position of the mobile device 12. As discussed above, the positioning server 120 communicates with the APs 16 over a backhaul link via a network adapter 56 and/or other means, such as a transceiver and associated antennas (not shown).

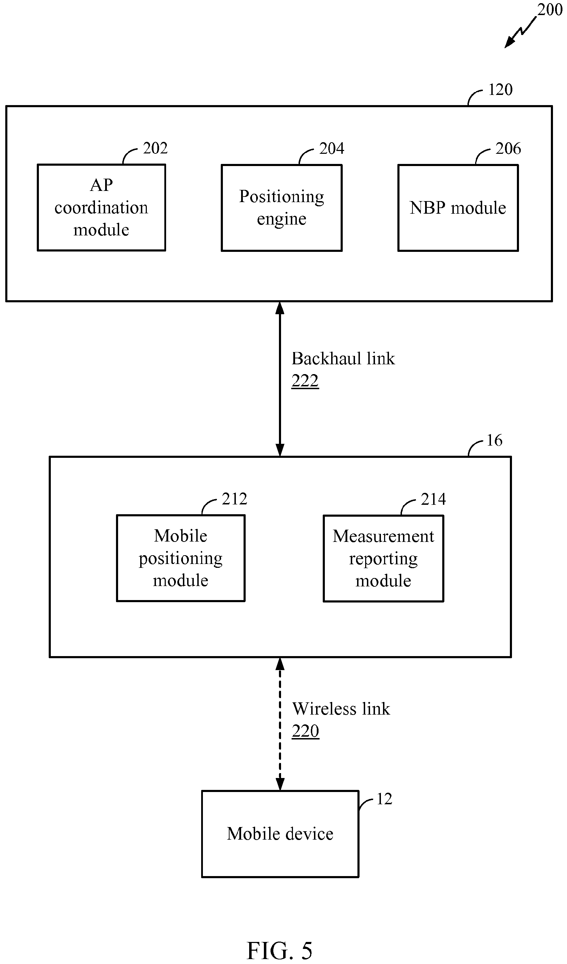

**FIG. 5** shows a high-level overview of a positioning implementation, here an NBP implementation, in a system 200 utilizing the mobile device 12, one or more of the APs 16, and the positioning server 120. Here, the mobile device 12 is in range of one or more of the APs 16 and is operable to communicate with one or more of the APs 16 via a wireless link 220. While only the one AP 16 is shown in **FIG. 5** for simplicity, the system 200 preferably includes multiple ones of the APs 16 (e.g., 3 or more APs, etc.). The APs 16, in turn, communicate with the positioning server 120 over a backhaul link 222.

The positioning server 120 as shown in **FIG. 5** includes an AP coordination module 202, a positioning engine 204, and an NBP module 206. The AP 16 shown in **FIG. 5** includes a mobile positioning module 212 and a measurement reporting module 214. The functionality of the respective modules 202, 204, 206, 212, 214 of the positioning server 120 and AP 16 are described in further detail below.

The NBP module 206 may include software libraries and/or other hardware or software components configured to manage NBP for the devices in the system 200. While the NBP module 206 is illustrated in **FIG. 5** as a part of the positioning server 120, the NBP module 206 may, in some implementations, be implemented at the AP 16 and/or one or more other devices within the system 200. For instance, the AP 16 may alternatively operate in a decentralized network environment in which a dedicated positioning server is not used and the AP 16 (and/or other APs or other devices in the network) instead implements some or all of the functionality of the positioning server 120, including that of the NBP module 206, as shown in **FIG. 5** and described herein. Other implementations are also possible.

Upon NBP being requested for the mobile device 12 (e.g., via an application or other means associated with the mobile device 12, or by the AP 16 and/or positioning server 120 with user authorization), the AP coordination module 202 of the positioning server 120 selects one or more of the APs 16 that are within range of the mobile device 12 to initiate a positioning exchange with the mobile device 12. The mobile positioning module 212 of the AP 16 initiates this exchange with the mobile device 12 and performs measurements, such as RTT measurements, RSSI measurements, or the like, based on signals transmitted to and received from the mobile device 12 during the exchange. The measurement reporting module 214 of the AP 16 reports these measurements back to the positioning server 120, which utilizes the positioning engine (PE) 204 to determine the position of the mobile device 12, e.g., using trilateration, based on the reported measurements and known locations of the APs 16. The determined position may then, in turn, be transmitted from the positioning server 120 to the APs 16 and/or the mobile device 12 (either from the positioning server 120 directly to the mobile device 12 or indirectly to the mobile device 12 via one of the APs 16 or another entity in communication with the mobile device 12).

In a network that utilizes Carrier Sense Multiple Access with Collision Avoidance (CSMA-CA) to regulate access to network resources, such as a Wi-Fi network or other similar networks, the mobile device 12 is configured to first sense the medium and begin a transmission only when the medium is free. Additionally, when one of the APs 16 transmits a measurement packet to the mobile device 12, the transmission will be sensed by all co-channel APs 16 in the coverage area of the transmitting AP 16. Such a transmission may also cause interference to adjacent channel APs 16 in the coverage area of the transmitting AP 16 to a lesser extent to the interference caused to the co-channel APs 16. As a result, a measurement packet sent by the transmitting AP 16 reduces the network bandwidth for some or all of the other APs 16 in the coverage area of the transmitting AP 16. This, in turn, may limit the number of devices that can be simultaneously located via NBP in a given area.

In addition, if the mobile device 12 is a battery-operated device and/or another device configured to operate on low power, the transmit (Tx) power used by the mobile device 12 may be much lower than the Tx power used by the APs 16. In some implementations, the AP Tx power may be 3-10 dB higher than the mobile Tx power. As a result, the AP coverage area is generally larger than a corresponding mobile coverage area.

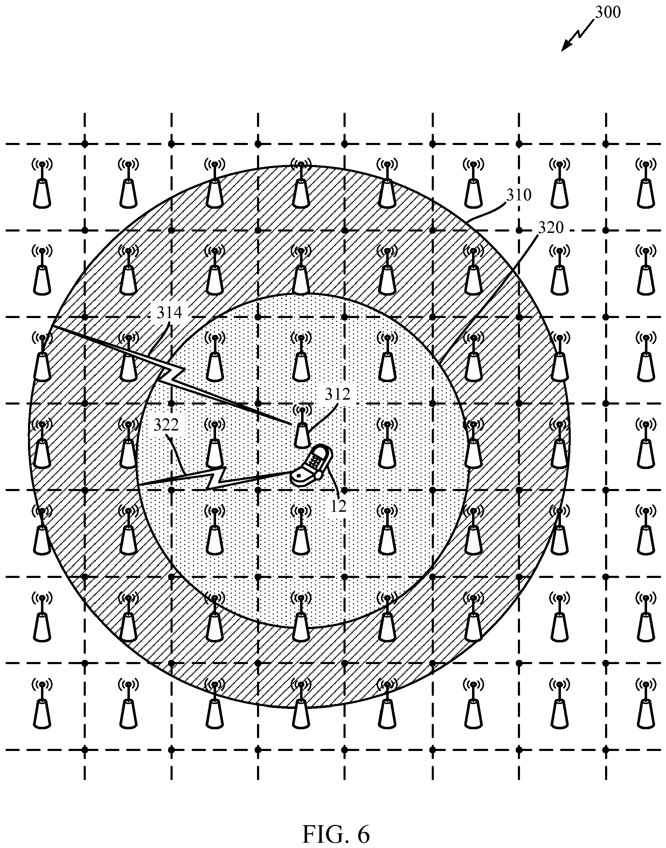

Diagram 300 in **FIG. 6** illustrates an example AP deployment for a typical venue. In diagram 300, a first region 310 indicates the coverage area of the AP 16 to which the mobile device 12 is connected for communication service, referred to as the "connected AP" 312 for the mobile device 12. A second region 320 indicates the coverage area of the mobile device 12. As used herein, a "coverage area" for a given device is defined as a spatial region (e.g., a circular region), which is in turn defined by a focal point (e.g., set at the position of the device) and a communication range of the device. The communication range may be either a maximum range or a range based on actual Tx power levels used by one or more antennas of the device.

As shown in diagram 300, the region 310 is a circular coverage region (coverage area) for the connected AP 312. The region 310 has a center point located at the position of the connected AP 312 and a radius corresponding to a maximum range 314 of the connected AP 312. The region 320 is a circular coverage region for the mobile device 12. The region 320 has a center point located at the position of the mobile device 12 and a radius corresponding to a maximum range 322 of the mobile device 12. Other shapes, definitions, or configurations of coverage areas could also be used. For instance, a communications device with multiple antennas may have a non-circular coverage area due to beamforming or other spatial processing performed for signals transmitted via each of the antennas. Other configurations are also possible.

As further shown in diagram 300, measurement packets transmitted by the connected AP 312 may interfere with and/or otherwise impact some or all of the other APs 16 located within the region 310 that operate on the same channel as the connected AP 312 and/or an adjacent channel. Because the coverage area of the connected AP 312 is larger than that of the mobile device 12, a large number of these other APs 16 may be affected.

To mitigate the impact of NBP-related signaling communicated to and from one of the APs 16 on its neighboring APs 16, the AP 16 and/or the positioning server 120 can implement techniques for controlling the Tx power level used by the AP 16 for positioning. For instance, returning to **FIG. 5****,** the NBP module 206 and/or other components of the positioning server 120 and/or the AP 16 may set, recommend, or otherwise alter the positioning Tx power utilized by the AP 16. These techniques are described in further detail below.

In general, the Tx power utilized by a given one of the APs 16 for positioning signaling is controlled based at least in part on the approximate position of the mobile device 12 relative to the area of the AP 16. This is in contrast to conventional AP power control, in which an AP has no knowledge relating to positions of mobile devices to which the AP is not connected. Here, the positioning server 120 and one or more of the APs 16 coordinate to set Tx power levels for all of the APs 16 in order to improve the optimization of the Tx powers used by the respective APs 16. As a result, the number of disjoint AP coverage areas that can be located within a given venue is increased, thereby enabling more APs 16 to be positioned within a venue. Further, the number of location requests that can be handled by a network concurrently may be increased. The techniques described herein can be utilized with both single-channel and multi-channel network AP configurations, as well as with both NBP and MBP configurations. Other configurations are also possible. In the following description, references to a specific configuration apply to all possible configurations unless stated otherwise.

The modules 202, 204, 206 of the positioning server 120 and the modules 212, 214 of the AP 16 shown in **FIG. 5** may be implemented in hardware, software, (e.g., implemented by a processor 30, 50 executing software 34, 54 stored on a memory 32, 52), a combination of hardware and software, and/or by any other suitable means.

The system 200 shown in **FIG. 5** may facilitate power-optimized positioning load within an associated communication network using a variety of techniques as described herein. These include, but are not limited to, Tx power control of positioning packets (e.g., keep awake packets, measurement packets, etc.), NBP Server Protocol (NSP) modifications to facilitate positioning power control, power control by the NBP module 206, autonomous fine tuning of Tx power by the APs 16, etc. In general, the positioning server 120 and/or APs 16 perform power optimization for a given one of the APs 16 by estimating operating parameter(s) of the mobile device 12, including at least a coverage area of the mobile device 12 and a Tx power level of the mobile device 12, and setting the Tx power level for positioning messages from the AP 16 to the mobile device 12 as a function of those operating parameter(s).

With respect to power control via NSP modification, a field or other indicator may be added by the positioning server 120 into an NSP wakeup message and/or an NSP measurement request to indicate a recommended Tx power and/or an adjustment thereto. As used herein, an "NSP message" refers to a message used by the APs 16 and positioning server 120 (e.g., via the NBP module 206) to communicate with each other. A "positioning packet," "positioning signaling," and/or similar terms refer to positioning-related information communicated between the APs 16 and mobile device 12. This information may include, e.g., keep awake packets sent by the APs 16 in order to keep the mobile device 12 in an active or "awake" state, measurement packets sent by the APs 16 to take measurements (e.g., RSSI, RTT, etc.) from the mobile device 12, measurement response packets sent from the mobile device 12 to the APs 16, or the like.

For AP Tx power control managed by the NBP module 206, the NBP module 206 may compute a Tx power to be used by the APs 16 for positioning packets based on one or more criteria. These criteria may include, but are not limited to, Tx power of the mobile device 12, a Tx power and/or detection threshold of the APs 16, path loss (link budget) information associated with a communication link between the APs 16 and the mobile device 12, a detection threshold of the mobile device 12, etc. As used herein, a "detection threshold" refers to a minimum signal strength at which a device can receive a packet successfully, e.g., within an acceptable probability or degree of accuracy. After the NBP module 206 computes a Tx power level for the APs 16, the Tx power level may be communicated to the AP 16 as an absolute power level (e.g., an assigned or recommended power level), a relative (delta) power level indicating a change from a previous Tx level of the APs 16, and/or by other means.

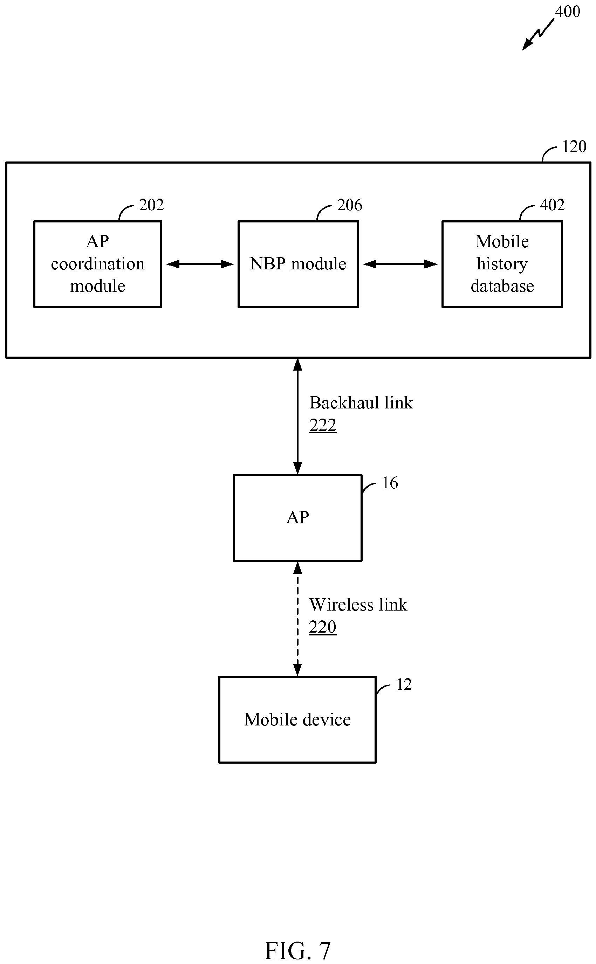

The NBP module 206 may obtain information relating to the mobile device 12 and/or the APs 16 within its network in various ways. For instance, the positioning server 120 retains information relating to the Tx power and detection threshold of the APs 16 with which it communicates, and may use this information in determining a Tx power for the APs 16. Further, as shown by system 400 in **FIG. 7****,** the NBP module 206 may obtain information relating to mobile device Tx power from a mobile history database 402, which retains the estimate of Tx power for each device in the system based on past measurements.

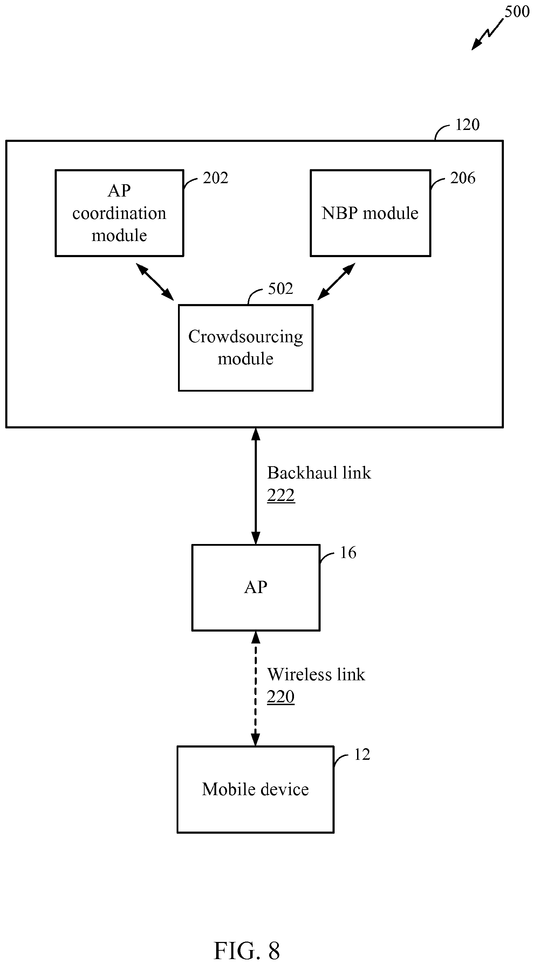

Also or alternatively, as shown by system 500 in **FIG. 8****,** the NBP module 206 may obtain mobile Tx power information through crowdsourcing, e.g., via a crowdsourcing module 502. Here, the NBP module 206, via the crowdsourcing module 502, obtains media access control (MAC) addresses and/or other identifiers of the mobile device 12 and/or other devices in the network. The crowdsourcing module 502 may also obtain information relating to the operating capabilities of the mobile device 12, such as hardware specifications, model identifiers, etc., from the mobile device 12. Alternatively, the operating capabilities of the mobile device 12 may be inferred or estimated from its MAC address or other identifier. Based on the information collected about devices including the mobile device 12, the NBP module 206 predicts the Tx power associated with the mobile device 12.

To obtain path loss information for a given one of the APs 16 and the mobile device 12, the NBP module 206 may utilize a previous position estimate and/or related measurement results. For instance, when the last position estimate for the mobile device 12 is available (e.g., via the mobile history database 402) and no older than a threshold time period, the NBP module 206 can use the position estimate to predict the path loss between different ones of the APs 16 and the mobile device 12. This can be used to optimize the Tx power of multiple ones of the APs 16 that engage in positioning signaling with the mobile device 12 individually.

To obtain the detection threshold for the mobile device 12, the NBP module 206 can estimate the detection threshold from previous position estimates (e.g., stored at the mobile history database 402). Here, the NBP module 206 utilizes the respective Tx power levels of the mobile device 12 for which the position estimate is given and APs with which the mobile device 12 communicated to obtain the position estimate, a distance between the mobile device 12 and a farthest one of the APs 16 that was able to obtain measurements from the mobile device 12, and/or other information relating to the position estimate in order to estimate the detection threshold. For instance, the detection threshold for the mobile device 12 can be given as a function of AP Tx power plus the path loss between the mobile device 12 and the farthest one of the APs 16 which was able to obtain measurements from the mobile device 12, assuming that the AP Tx power is greater than the mobile Tx power. Other techniques could also be used.

The NBP module 206, and/or other components of the positioning server 120, may recommend a Tx power level for positioning messages sent by the APs 16 based on various techniques. For instance, the NBP module 206 may set an Tx power level for a given one of the APs 16 based on a mobile device coverage area. More particularly, the NBP module 206 sets the AP Tx power to a level at which the coverage area of the mobile device 12 is a subset of the coverage area of the given AP 16. This AP Tx power may be a minimum Tx power at which the coverage area of the mobile device 12 is a subset of the coverage area of the given AP 16; however, other power levels could be used. Further, the AP Tx power may be upper limited by the default Tx power of the given AP 16 and/or other factors. As a result of matching the AP Tx power to a corresponding mobile coverage area, collision probabilities at the mobile device may be reduced, and interference caused by the APs 16 to each other and/or to other devices may also be reduced.

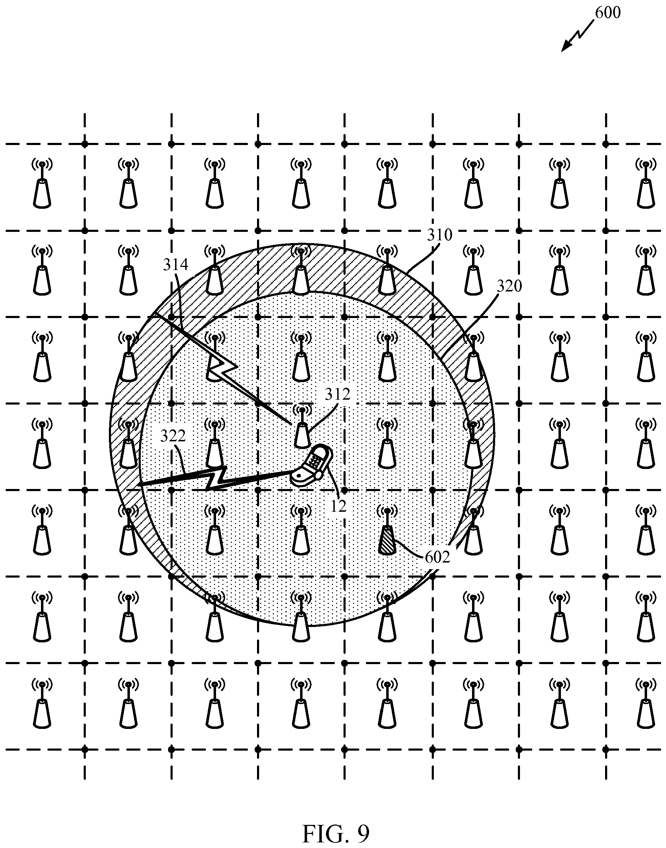

The above technique is illustrated by diagram 600 in **FIG. 9****.** Here, the Tx power for the connected AP 312 for the mobile device 12 is set to a minimum Tx power such that the coverage area 320 of the mobile device 12 (defined by the position of the mobile device 12 and the communication range 322 of the mobile device) is a subset of the coverage area 310 of the connected AP 312. Similarly to the coverage area of the mobile device 12, the coverage area of the connected AP 312 is defined by the position of the connected AP 312 and the communication range 314 of the connected AP. Thus, as the communication range of the connected AP 312 is a function of its Tx power, modifying the Tx power utilized by the connected AP 312 proportionately modifies its communication range 314 and, by extension, its coverage area 310. As a result of setting the Tx power of the connected AP 312 as shown in diagram 600, the area in which the connected AP 312 causes interference is reduced.

As another example, the NBP module 206 may set an AP Tx power level based on mobile device Tx power. In this case, the NBP module 206 recommends a Tx power level for a given one of the APs 16 that is similar to (e.g., within a configurable margin of) Tx power levels for the mobile device 12. As an example, a Tx power level recommended for respective ones of the APs 16 may be set based on a sum of an average mobile Tx power for an area surrounding the APs 16, a difference between a representative (average, minimum, maximum, etc.) mobile detection threshold and an AP detection threshold, and a configurable margin. Other techniques or formulas could also be used.

As still another example, the NBP module 206 may set an AP Tx power level with reference to the detection capabilities of the mobile device 12. In this case, the NBP module 206 recommends an AP Tx power level for a given one of the APs 16 that is sufficient for the mobile device 12 to successfully receive positioning packets from the AP 16 with at least a threshold degree of accuracy. This recommended power level may be set to a minimum value that enables at least the threshold probability of successful reception at the mobile device 12. Alternatively, a configurable power margin may be added. The NBP library module may set the recommended Tx power for respective ones of the APs 16 based on a function of the path loss between the AP 16 and the mobile device 12, the difference in detection threshold between the AP 16 and the mobile device 12, and (optionally) a configurable margin. Other formulas could also be used.

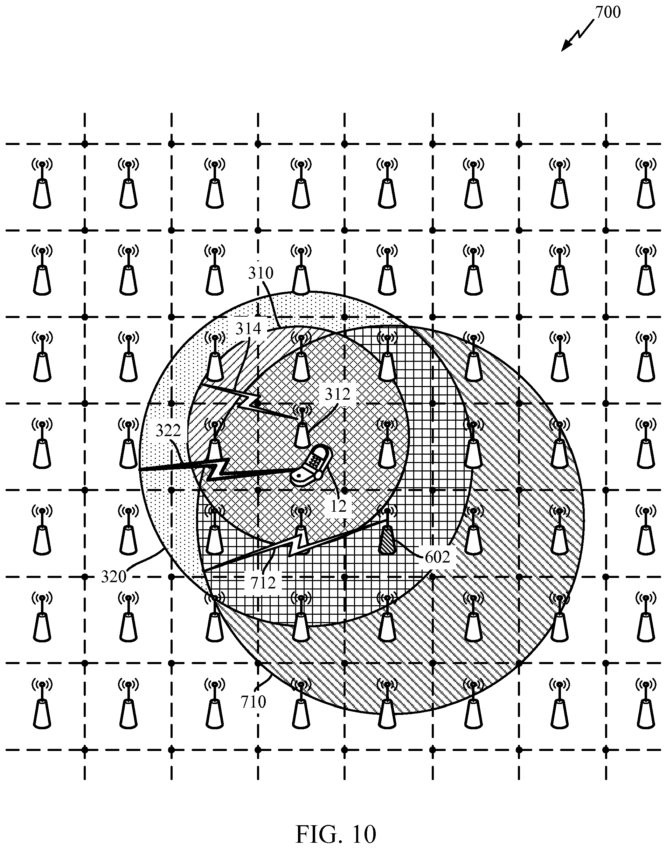

AP Tx power management with respect to detection capability of the mobile device 12 is shown by diagram 700 in **FIG. 10****.** Diagram 700 illustrates that the above technique is utilized to optimize Tx power for both the connected AP 312 for the mobile device 12 as well as one or more other ones of the APs 16, such as an additional AP 702. The Tx power of the APs 312, 702 are set such that the associated ranges 314, 712 of the respective APs 312, 702 are substantially minimal while still enabling the mobile device 12 to receive packets from each of the APs 312, 702 with at least a threshold probability of success. As a result of the power control technique shown by diagram 700, both the coverage area 310 of the connected AP 312 and the coverage area 710 of the additional AP 702 are optimized, thereby reducing the areas at which interference will be detected from the APs 312, 702.

As the above technique is performed with reference to a specific mobile device, here the mobile device 12, similar techniques to those provided above may be used by the mobile device 12 to optimize AP Tx power for an MBP deployment. In the case of MBP, the mobile device 12 can obtain a recommended Tx power for positioning packets from various elements of an associated network, such as the positioning server 120 and/or one or more components thereof (e.g., the NBP module 206 or a similar module), a cloud service, etc. The recommended Tx power is determined by the positioning server 120 and/or other network elements based on a last-known position of the mobile device 12 and/or other information relating to the mobile device 12. For an MBP deployment, the positioning server 120 may utilize similar algorithms and/or techniques to those described for NBP above in computing a Tx power recommendation. The mobile device 12 and the positioning server 120 are additionally capable of communication with each other in an MBP deployment, either indirectly via the AP 16 and the links 220, 222 or via an additional direct communication link between the mobile device 12 and the positioning server 120.

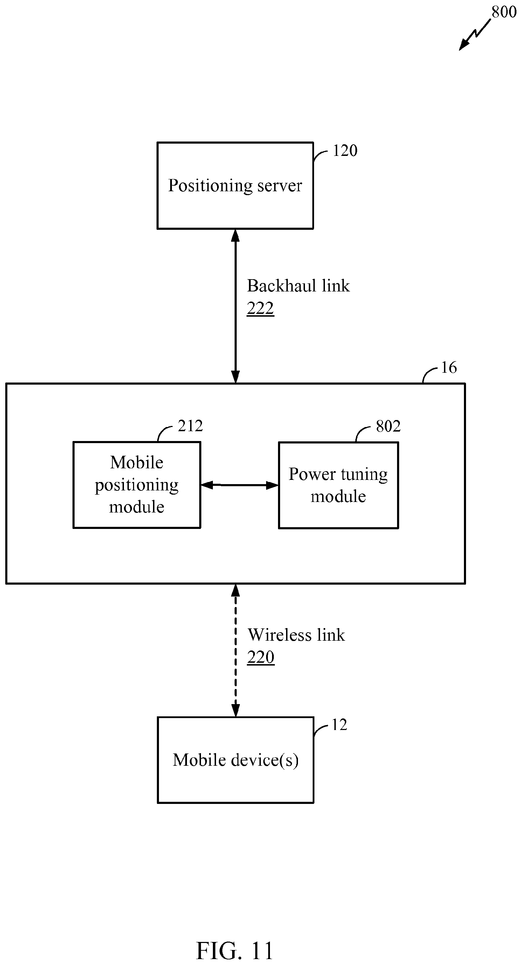

In addition to, or in place of, AP Tx power control via the NBP module 206 as described above, the APs 16 may also autonomously set and/or adjust their Tx power for positioning transmissions. This autonomous AP power adjustment is shown by system 800 in **FIG. 11****.** Here, an illustrated one of the APs 16 includes a power tuning module 802 for adjusting a power level at which the mobile positioning module 212 provides positioning signaling (e.g., measurement packets, keep awake packets, etc.) to the mobile device 12 over the wireless link 220. The power tuning module 802 may be used in the absence of a recommended Tx power from the NBP module 206 or as a supplement to a recommended Tx power.

The power tuning module 802 may utilize a variety of parameters in adjusting the Tx power level of its associated AP 16. For instance, if the AP 16 is the connected AP for the mobile device 12, the power tuning module 802 may optimize Tx power based on RSSI information received from the mobile device 12. As another example, the power tuning module 802 may optimize Tx power based on a Tx power and/or detection threshold of the mobile device 12. The AP 16 may obtain information relating to these parameters by estimating them based on a history of communication with the mobile device 12 (e.g., previous messages received from the mobile device 12), from the NSP library module 206 via NSP messages, based on crowdsourced device information in a similar manner to that discussed with respect to the crowdsourcing module 502 shown in **FIG. 8****,** etc. The power tuning module 802 may also sniff or otherwise detect messages sent from the mobile device 12 to other devices in the network and predict the Tx power and/or detection threshold of the mobile device 12 based on the received RSSI.

The power tuning module 802 may also adaptively optimize power during a positioning exchange with the mobile device 12 based on information received from the mobile device 12. For instance, the power tuning module 802 may adjust the Tx power of the associated AP 16 based on whether an acknowledgment (ACK) is received from the mobile device 12 for a given positioning packet by, e.g., decreasing or not changing the Tx power if an ACK is received or by increasing the Tx power if either an ACK is not received or a negative ACK (NACK) is received. In combination with performing an adaptive Tx power adjustment, the power tuning module 802 may indicate the adjustment(s) made to the positioning server 120 (e.g., the NBP module 206) so that the positioning server 120 can tune the path loss and detection threshold parameters for the AP 16 and mobile device 12 accordingly.

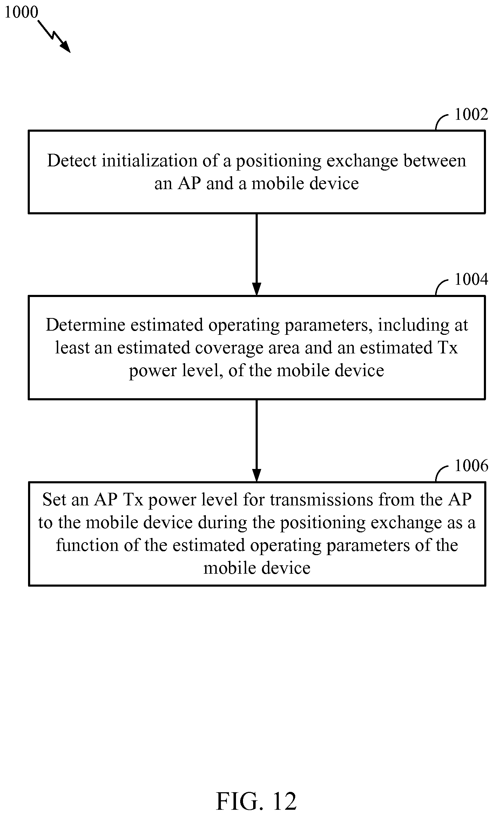

Referring to **FIG. 12****,** with further reference to **FIGS. 1-11****,** a process 1000 of controlling Tx power of one of the APs 16 for positioning signaling includes the stages shown. The process 1000 is, however, an example only and not limiting. The process 1000 can be altered, e.g., by having stages added, removed, rearranged, combined, and/or performed concurrently. Still other alterations to the process 1000 as shown and described are possible.

At stage 1002, initialization of a positioning exchange between the AP 16 and mobile device 12 is detected, e.g., at the positioning server 120 and/or at the AP 16. The initialization may be detected at stage 1002 by detecting a request for the positioning exchange, which may be sent by any suitable device within an associated communication system, such as the mobile device 12 and/or another device, the AP 16, the positioning server 120, another server or other entity within the system, etc. Other initialization methods could also be used. Further, the positioning exchange may be conducted according to NBP, MBP, and/or other positioning protocols.

At stage 1004, estimated operating parameters of the mobile device 12, including at least an estimated coverage area and an estimated Tx power level, are determined. The estimated operating parameters of the mobile device 12 determined at stage 1004 may be obtained based on a history of prior communication between the AP 16 and the mobile device 12 (e.g., via the mobile history database 402 stored at the positioning server 120 as shown in system 400, and/or another similar data storage at the positioning server 120 and/or AP 16), crowdsourced mobile device information (e.g., via the crowdsourcing module 502 of the positioning server 120 as shown in system 500, or a similar module residing at the AP 16), and/or other information as described above. Here, the "coverage area" of the mobile device 12 refers to a substantially circular or elliptical region, defined by a position of the mobile device 12 and respective antenna ranges associated with the mobile device 12, in which the mobile device 12 is capable of receiving and/or transmitting data with at least a threshold probability of success.

At stage 1006, an AP Tx power level for transmissions (e.g., of positioning messages) from the AP 16 to the mobile device 12 during the positioning exchange is set as a function of the estimated operating parameters of the mobile device as determined at stage 1004. Here, the NBP module 206 may recommend, set or adjust a Tx power level used by the AP 16 as a function of the coverage area and/or Tx power of the mobile device, as described above. Alternatively, the AP Tx power may be set such that the mobile device 12 is estimated to be capable of receiving positioning packets from the AP 16 with at least a threshold degree of accuracy, as described with reference to diagram 700 in **FIG. 10****.** As another alternative, the AP 16 may utilize the power tuning module 802 or other means to autonomously adjust its Tx power, as described above with respect to **FIG. 11****.**

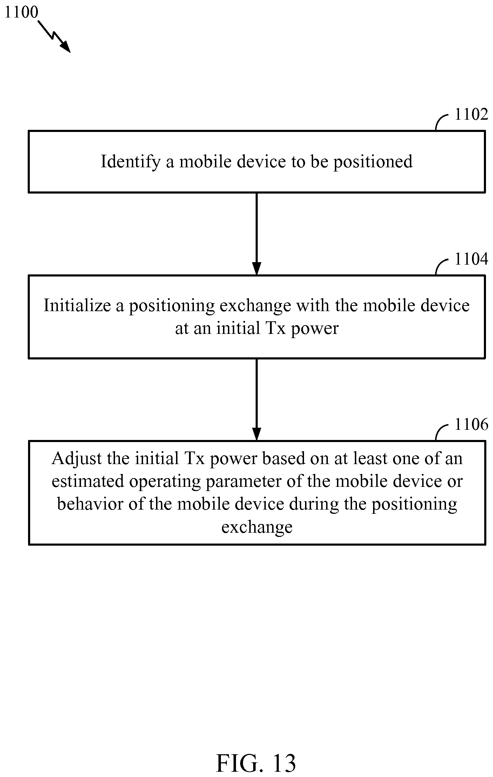

Referring next to **FIG. 13****,** with further reference to **FIGS. 1-11****,** another process 1100 of controlling Tx power of one of the APs 16 for positioning signaling includes the stages shown. The process 1100 is, however, an example only and not limiting. The process 1100 can be altered, e.g., by having stages added, removed, rearranged, combined, and/or performed concurrently. Still other alterations to the process 1100 as shown and described are possible.

At stage 1102, a mobile device to be positioned, i.e., the mobile device 12, is identified. This identification is performed by the connected AP 16 for the mobile device 12, another one of the APs 16, a positioning server 120, or another suitable network device.

At stage 1104, the AP 16 initializes a positioning exchange with the mobile device 12 at an initial Tx power. The positioning exchange may be initialized in various ways, such as by a command or request from the positioning server 120 or the AP 16 itself for an NBP implementation, by the mobile device 12 for an MBP implementation, etc. Further, the initial Tx power may be determined independently by the AP 16 or provided to the AP 16 by the positioning server 120 (e.g., via the NBP module 206) or other means. Upon initialization of the positioning exchange, the AP 16 is configured to communicate positioning signaling, packets, messages, etc., with the mobile device 12 over the wireless link 210 via the mobile positioning module 212, as shown in **FIG. 5****.**

At stage 1106, the initial Tx power utilized at stage 1104 is adjusted, e.g., via the power tuning module 802 and/or other components of the AP 16, based on at least one of an estimated operating parameter of the mobile device 12 or behavior of the mobile device 12 during the positioning exchange. As described above, operating parameters of the mobile device 12 that may be used at stage 1106 include RSSI and/or other signal quality metrics associated with packets already received from the mobile device 12, a Tx power and/or detection threshold of the mobile device 12, etc. As further described above, the power tuning module 802 may adjust the Tx power of the AP 16 at stage 1106 based on the presence or absence of ACKs corresponding to positioning packets transmitted from the AP 16 to the mobile device 12, and/or other aspects of the behavior of the mobile device 12 during the positioning exchange.

The processes 1000, 1100 described above may be implemented by one or more devices as described above, which may include the positioning server 120 comprising components such as the AP coordination module 202, positioning engine 204, NBP module 206, etc., and/or one of the APs 16 comprising components such as the mobile positioning module 212, measurement reporting module 214, power tuning module 802, etc. The illustrated and described components of the positioning server 120 and/or APs 16 may respectively be configured to operate as means for performing the acts shown in processes 1000, 1100. The operations performed by the positioning server 120, the AP 16, and/or their constituent components as shown by processes 1000, 1100 may be implemented in hardware, in software (e.g., by one of the processors 30, 50 executing processor-executable software code 34, 54 stored on the associated one of the memories 32, 52, which are non-transitory processor-readable mediums), or a combination of hardware or software. Further, while the positioning server 120 is shown and described as a single entity, some or all of the functionality of the positioning server 120 described above may be distributed among multiple computing devices. Similarly, actions performed by individual ones of the APs 16 as described above may be distributed across a plurality of the APs 16.

The methods, systems, and devices discussed above are examples. Various alternative configurations may omit, substitute, or add various procedures or components as appropriate. For instance, in alternative methods, stages may be performed in orders different from the discussion above, and various stages may be added, omitted, or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the scope of the disclosure.

Configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

As used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C), or combinations with more than one feature (e.g., AA, AAB, ABBC, etc.).

Having described several example configurations, various modifications, alternative constructions, and equivalents may be used. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claim

## Claims

1. A method (1000, 1100) for controlling transmit, Tx, power of an access point, AP (16), in a wireless communication system (200), the method comprising:
detecting (1002) initialization of a positioning exchange between the AP and a mobile device (12);
determining (1004) estimated operating parameters of the mobile device, the estimated operating parameters of the mobile device comprising an estimated coverage area (320) of the mobile device and an estimated Tx power level of the mobile device; and
setting (1006) an AP Tx power level for transmissions from the AP to the mobile device during the positioning exchange as a function of the estimated operating parameters of the mobile device.

2. The method (1000) of claim 1 wherein determining (1004) the estimated operating parameters of the mobile device comprises determining the estimated coverage area of the mobile device based at least in part on an estimated position of the mobile device and an estimated communication range of the mobile device.

3. The method (1000) of claim 2 wherein setting (1006) the AP Tx power level comprises setting the AP Tx power level such that the estimated coverage area of the mobile device is a subset of a coverage area (310) of the AP as defined with respect to the AP Tx power level.

4. The method (1000) of claim 1 wherein determining (1004) the estimated operating parameters of the mobile device comprises determining the estimated Tx power level of the mobile device based on measured Tx power levels associated with one or more past transmissions from the mobile device or determining (1004) the estimated Tx power level of the mobile device based on information received from the mobile device.

5. The method (1000) of claim 1 wherein setting (1006) the AP Tx power level comprises setting the AP Tx power level such that a difference between the AP Tx power level and the estimated Tx power level of the mobile device is less than a threshold.

6. The method (1000) of claim 1 wherein determining (1004) the estimated operating parameters of the mobile device comprises determining at least one of an estimated detection threshold of the mobile device or an estimated path loss between the AP and the mobile device.

7. The method (1000) of claim 6 wherein determining (1004) the estimated operating parameters of the mobile device further comprises determining the estimated path loss between the AP and the mobile device based on a previous position estimate for the mobile device.

8. The method (1000) of claim 6 wherein setting (1006) the AP Tx power level comprises:
computing a detectable AP Tx power level for the mobile device based on the estimated detection threshold of the mobile device and the estimated path loss between the AP and the mobile device; and
setting the AP Tx power level as a function of the detectable AP Tx power level for the mobile device.

9. The method (1000) of claim 1 further comprising:
receiving, at the AP, information relating to the Tx power level of the mobile device; and
adjusting, at the AP, the AP Tx power level based on the Tx power level of the mobile device.

10. The method (1100) of claim 1 further comprising:
transmitting, at the AP, a positioning packet to the mobile device at the AP Tx power level;
attempting, at the AP, to detect an acknowledgment, ACK, from the mobile device for the positioning packet; and
increasing (1106) the AP Tx power if the ACK is not detected at the AP.

11. The method (1000) of claim 1 wherein:
determining the estimated operating parameters of the mobile device further comprises determining an estimated detection threshold of the mobile device; and
setting (1006) the AP Tx power level further comprises setting the AP Tx power level based at least in part on the estimated detection threshold of the mobile device.

12. An apparatus (120) for controlling transmit, Tx power of an access point (16), AP, in a wireless communication system, the apparatus comprising:
means for detecting initialization (202) of a positioning exchange between the AP and a mobile device (12);
means for determining (206) estimated operating parameters of the mobile device, the estimated operating parameters comprising an estimated coverage area of the mobile device and an estimated Tx power level of the mobile device; and
means for setting (206) an AP Tx power level for transmissions from the AP to the mobile device during the positioning exchange as a function of the estimated operating parameters of the mobile device.

13. The apparatus (120) of claim 12 wherein:
the means for determining (206) the estimated operating parameters of the mobile device comprises means for determining the estimated coverage area of the mobile device based at least in part on an estimated position of the mobile device and an estimated communication range of the mobile device; and
the means for setting (206) the AP Tx power level comprises means for setting the AP Tx power level such that the estimated coverage area of the mobile device is a subset of a coverage area of the AP as defined with respect to the AP Tx power level.

14. The apparatus (120) of claim 12 wherein the means for determining (206) the estimated operating parameters of the mobile device comprises determining the estimated Tx power level of the mobile device based on at least one of Tx power levels associated with one or more past transmissions from the mobile device or information collected from the mobile device.

15. A non-transitory processor-readable storage medium comprising processor-executable instructions configured to cause a processor to carry out the steps of any of claims 1 to 11.

## Patentansprüche

1. Ein Verfahren (1000, 1100) zum Steuern einer Sendeleistung bzw. Tx-Leistung (Tx = transmit) eines Zugriffspunkts bzw. AP (AP = access point) (16) in einem Drahtloskommunikationssystem (200), wobei das Verfahren Folgendes aufweist:
Detektieren (1002) einer Initialisierung eines Positionsbestimmungsaustausches zwischen dem AP und einer Mobileinrichtung (12);
Bestimmen (1004) von geschätzten Betriebsparametern der Mobileinrichtung, wobei die geschätzten Betriebsparameter der Mobileinrichtung einen geschätzten Abdeckungsbereich (320) der Mobileinrichtung und einen geschätzten Tx-Leistungspegel der Mobileinrichtung aufweisen; und
Einstellen (1006) eines AP-Tx-Leistungspegels für Sendungen von dem AP an die Mobileinrichtung während des Positionsbestimmungsaustausches als eine Funktion der geschätzten Betriebsparameter der Mobileinrichtung.

2. Verfahren (1000) nach Anspruch 1, wobei das Bestimmen (1004) der geschätzten Betriebsparameter der Mobileinrichtung Bestimmen des geschätzten Abdeckungsbereichs der Mobileinrichtung basierend wenigstens teilweise auf einer geschätzten Position der Mobileinrichtung und einer geschätzten Kommunikationsreichweite der Mobileinrichtung aufweist.

3. Verfahren (1000) nach Anspruch 2, wobei das Einstellen (1006) des AP-Tx-Leistungspegels Einstellen des AP-Tx-Leistungspegels aufweist, so dass der geschätzte Abdeckungsbereich der Mobileinrichtung ein Subsatz eines Abdeckungsbereichs (310) des AP ist, wie er mit Bezug auf den AP-Tx-Leistungspegel definiert ist.

4. Verfahren (1000) nach Anspruch 1, wobei das Bestimmen (1004) der geschätzten Betriebsparameter der Mobileinrichtung Bestimmen des geschätzten Tx-Leistungspegels der Mobileinrichtung basierend auf gemessenen Tx-Leistungspegeln, die mit ein oder mehreren vergangenen Sendungen von der Mobileinrichtung assoziiert sind, oder Bestimmen (1004) des geschätzten Tx-Leistungspegels der Mobileinrichtung basierend auf Information, die von der Mobileinrichtung empfangen wird, aufweist.

5. Verfahren (1000) nach Anspruch 1, wobei das Einstellen (1006) des AP-Tx-Leistungspegels Einstellen des AP-Tx-Leistungspegels aufweist, so dass eine Differenz zwischen dem AP-Tx-Leistungspegel und dem geschätzten Tx-Leistungspegel der Mobileinrichtung kleiner als ein Schwellenwert ist.

6. Verfahren (1000) nach Anspruch 1, wobei das Bestimmen (1004) der geschätzten Betriebsparameter der Mobileinrichtung Bestimmen eines geschätzten Detektionsschwellenwertes der Mobileinrichtung und/oder eines geschätzten Pfadverlustes zwischen dem AP und der Mobileinrichtung aufweist.

7. Verfahren (1000) nach Anspruch 6, wobei das Bestimmen (1004) der geschätzten Betriebsparameter der Mobileinrichtung weiter Bestimmen des geschätzten Pfadverlustes zwischen dem AP und der Mobileinrichtung basierend auf einer vorherigen Positionsschätzung der Mobileinrichtung aufweist.

8. Verfahren (1000) nach Anspruch 6, wobei das Einstellen (1006) des AP-Tx-Leistungspegels Folgendes aufweist:
Berechnen eines detektierbaren AP-Tx-Leistungspegels für die Mobileinrichtung basierend auf dem geschätzten Detektionsschwellenwert der Mobileinrichtung und dem geschätzten Pfadverlust zwischen dem AP und der Mobileinrichtung; und
Einstellen des AP-Tx-Leistungspegels als eine Funktion des detektierbaren AP-Tx-Leistungspegels für die Mobileinrichtung.

9. Verfahren (1000) nach Anspruch 1, das weiter Folgendes aufweist:
Empfangen, an dem AP, von Information, die sich auf den Tx-Leistungspegel der Mobileinrichtung bezieht; und
Anpassen, an dem AP, des AP-Tx-Leistungspegels basierend auf dem Tx-Leistungspegel der Mobileinrichtung.

10. Verfahren (1100) nach Anspruch 1, das weiter Folgendes aufweist:
Senden, an dem AP, eines Positionsbestimmungspakets an die Mobileinrichtung mit dem AP-Tx-Leistungspegel;
Versuchen, an dem AP, eine Bestätigung bzw. ein ACK (ACK = acknowledgement) von der Mobileinrichtung für das Positionsbestimmungspaket zu detektieren; und
Erhöhen (1106) der AP-Tx-Leistung, wenn kein ACK an dem AP detektiert wird.

11. Verfahren (1000) nach Anspruch 1, wobei:
das Bestimmen der geschätzten Betriebsparameter der Mobileinrichtung weiter Bestimmen eines geschätzten Detektionsschwellenwertes der Mobileinrichtung aufweist; und
das Einstellen (1006) des AP-Tx-Leistungspegels weiter Einstellen des AP-Tx-Leistungspegels basierend wenigstens teilweise auf dem geschätzten Detektionsschwellenwert der Mobileinrichtung aufweist.

12. Eine Vorrichtung (120) zum Steuern einer Sendeleistung bzw. Tx-Leistung (Tx = transmit) eines Zugriffspunktes bzw. AP (AP = access point) (16) in einem Drahtloskommunikationssystem, wobei die Vorrichtung Folgendes aufweist:
Mittel zum Detektieren einer Initialisierung (202) eines Positionsbestimmungsaustausches zwischen dem AP und einer Mobileinrichtung (12);
Mittel zum Bestimmen (206) von geschätzten Betriebsparametern der Mobileinrichtung, wobei die geschätzten Betriebsparameter einen geschätzten Abdeckungsbereich der Mobileinrichtung und einen geschätzten Tx-Leistungspegel der Mobileinrichtung aufweisen; und
Mittel zum Einstellen (206) eines AP-Tx-Leistungspegels für Sendungen von dem AP an die Mobileinrichtung während des Positionsbestimmungsaustausches als eine Funktion der geschätzten Betriebsparameter der Mobileinrichtung.

13. Vorrichtung (120) nach Anspruch 12, wobei:
die Mittel zum Bestimmen (206) der geschätzten Betriebsparameter der Mobileinrichtung Mittel aufweisen zum Bestimmen des geschätzten Abdeckungsbereichs der Mobileinrichtung basierend wenigstens teilweise auf einer geschätzten Position der Mobileinrichtung und einer geschätzten Kommunikationsreichweite der Mobileinrichtung; und
die Mittel zum Einstellen (206) der AP-Tx-Sendeleistung Mittel aufweisen zum Einstellen der AP-Tx-Sendeleistung, so dass der geschätzte Abdeckungsbereich der Mobileinrichtung ein Subsatz eines Abdeckungsbereiches des AP ist, wie er mit Bezug auf den AP-Tx-Leistungspegel definiert ist.

14. Vorrichtung (120) nach Anspruch 12, wobei die Mittel zum Bestimmen (206) der geschätzten Betriebsparameter der Mobileinrichtung Bestimmen des geschätzten Tx-Leistungspegels der Mobileinrichtung basierend auf Tx-Leistungspegeln, die mit einer oder mehreren vergangenen Sendungen von der Mobileinrichtung assoziiert sind und/oder Information, die von der Mobileinrichtung gesammelt wird, aufweisen.

15. Ein nicht transitorisches, prozessorlesbares Speichermedium, das von einem Prozessor ausführbare Instruktionen aufweist, die konfiguriert sind, um einen Prozessor zu veranlassen, die Schritte nach einem der Ansprüche 1 bis 11 auszuführen.

## Revendications

1. Procédé (1000, 1100), pour contrôler la puissance d'émission, Tx, d'un point d'accès, AP, (16), dans un système de communication sans fil (200), le procédé comprenant :
détecter (1002) l'initialisation d'un échange de positionnement entre l'AP et un dispositif mobile (12) ;
déterminer (1004) des paramètres de fonctionnement estimés du dispositif mobile, les paramètres de fonctionnement estimés du dispositif mobile comprenant une région de couverture estimée (320) du dispositif mobile et un niveau de puissance Tx estimé du dispositif mobile ; et
régler (1006) un niveau de puissance Txde l'AP pour des émissions à partir de l'AP vers le dispositif mobile pendant l'échange de positionnement en fonction des paramètres de fonctionnement estimés du dispositif mobile.

2. Procédé (1000) selon la revendication 1, dans lequel la détermination (1004) des paramètres de fonctionnement estimés du dispositif mobile comprend la détermination de la région de couverture estimée du dispositif mobile sur la base au moins en partie d'une position estimée du dispositif mobile et d'une portée de communication estimée du dispositif mobile.

3. Procédé (1000) selon la revendication 2, dans lequel le réglage (1006) du niveau de puissance Txde l'AP comprend le réglage du niveau de puissance Txde l'AP de telle sorte que la région de couverture estimée du dispositif mobile soit un sous-ensemble d'une région de couverture (310) de l'AP telle que définie par rapport au niveau de puissance Txde l'AP.

4. Procédé (1000) selon la revendication 1, dans lequel la détermination (1004) des paramètres de fonctionnement estimés du dispositif mobile comprend la détermination du niveau de puissance Tx estimé du dispositif mobile sur la base de niveaux de puissance Tx mesurés associés à une ou plusieurs émissions passées à partir du dispositif mobile ou la détermination(1004) du niveau de puissance Tx estimé du dispositif mobile sur la base d'informations reçues du dispositif mobile.

5. Procédé (1000) selon la revendication 1, dans lequel le réglage (1006) du niveau de puissance Txde l'AP comprend le réglage du niveau de puissance Txde l'AP de telle sorte qu'une différence entre le niveau de puissance Txde l'AP et le niveau de puissance Tx estimé du dispositif mobile soit inférieure à un seuil.

6. Procédé (1000) selon la revendication 1, dans lequel la détermination (1004) des paramètres de fonctionnement estimés du dispositif mobile comprend la détermination d'au moins l'un d'un seuil de détection estimé du dispositif mobile ou d'un affaiblissement de trajet estimé entre l'AP et le dispositif mobile.

7. Procédé (1000) selon la revendication 6, dans lequel la détermination (1004) des paramètres de fonctionnement estimés du dispositif mobile comprend en outre la détermination de l'affaiblissement de trajet estimé entre l'AP et le dispositif mobile sur la base d'une estimation de position précédente pour le dispositif mobile.

8. Procédé (1000) selon la revendication 6, dans lequel le réglage (1006) du niveau de puissance Txde l'AP comprend :
calculer un niveau de puissance Txde l'AP détectable pour le dispositif mobile sur la base du seuil de détection estimé du dispositif mobile et de l'affaiblissement de trajet estimé entre l'AP et le dispositif mobile ; et
régler le niveau de puissance Txde l'AP en fonction du niveau de puissance Txde l'AP détectable pour le dispositif mobile.

9. Procédé (1000) selon la revendication 1, comprenant en outre :
recevoir, au niveau de l'AP, des informations concernant le niveau de puissance Tx du dispositif mobile ; et
ajuster, au niveau de l'AP, le niveau de puissance Txde l'AP sur la base du niveau de puissance Tx du dispositif mobile.

10. Procédé (1100) selon la revendication 1, comprenant en outre :
émettre, au niveau de l'AP, un paquet de positionnement vers le dispositif mobileau niveau de puissance Txde l'au ;
tenter, au niveau de l'AP, de détecter un accusé de réception, ACK, provenant du dispositif mobile pour le paquet de positionnement ; et
augmenter (1106) la puissance Txde l'APsi l'ACK n'est pas détecté au niveau de l'AP.

11. Procédé (1000) selon la revendication 1, dans lequel :
la détermination des paramètres de fonctionnement estimés du dispositif mobile comprend en outre la détermination d'un seuil de détection estimé du dispositif mobile ; et
le réglage (1006) du niveau de puissance Txde l'AP comprend en outre le réglage du niveau de puissance Txde l'AP sur la base au moins en partie du seuil de détection estimé du dispositif mobile.

12. Dispositif (120) pour contrôler la puissance d'émission,Tx, d'un point d'accès, AP, (16)dans un système de communication sans fil, le dispositif comprenant :
des moyens pour détecter l'initialisation (202) d'un échange de positionnement entre l'AP et un dispositif mobile (12) ;
des moyens pour déterminer (206) des paramètres de fonctionnement estimés du dispositif mobile, les paramètres de fonctionnement estimés du dispositif mobile comprenant une région de couverture estimée du dispositif mobile et un niveau de puissance Tx estimé du dispositif mobile ; et
des moyens pour régler (206) un niveau de puissance Txde l'AP pour des émissions à partir de l'AP vers le dispositif mobile pendant l'échange de positionnement en fonction des paramètres de fonctionnement estimés du dispositif mobile.

13. Dispositif (120) selon la revendication 12, dans lequel :
les moyens pour déterminer (206) les paramètres de fonctionnement estimés du dispositif mobile comprennent des moyens pour déterminer la région de couverture estimée du dispositif mobile sur la base au moins en partie d'une position estimée du dispositif mobile et d'une portée de communication estimée du dispositif mobile ; et
les moyens pour régler (206) le niveau de puissance Txde l'AP comprennent des moyens pour régler le niveau de puissance Txde l'AP de telle sorte que la région de couverture estimée du dispositif mobile soit un sous-ensemble d'une région de couverture de l'AP telle que définie par rapport au niveau de puissance Txde l'AP.

14. Dispositif (120) selon la revendication 12, dans lequel les moyens pour déterminer (206) les paramètres de fonctionnement estimés du dispositif mobile comprennent la détermination du niveau de puissance Tx estimé du dispositif mobile sur la base d'au moins un élément parmi des niveaux de puissance Tx associés à une ou plusieurs émissions passées du dispositif mobile ou des informations recueillies à partir du dispositif mobile.

15. Support de stockage non transitoire lisible par un processeur, comprenant des instructions exécutables par un processeur agencées pour amener un processeur à réaliser les étapes de l'une quelconque des revendications 1 à 11.
